# FASCICULE DE BREVET EUROPEEN

(11) **EP 0 933 110 B1**
(45) Date de publication et mention de la délivrance du brevet: **05.09.2001**
(21) Numéro de dépôt: 99420019.4
(22) Date de dépôt: 21.01.1999
(51) Int. Cl.: B01D 21/28, C02F 1/24, B01D 17/028, B01D 17/035, B01D 21/24

(54) **Dispositif de clarification d'un liquide chargé par flottation**
Vorrichtung zur Klärung einer durch Flotation beladenen Flüssigkeit
Clarification apparatus for a liquid loaded by flotation

(30) Priorité: 30.01.1998 FR 9801320
(43) Date de publication de la demande: 04.08.1999
(73) Titulaire: Kaltchev, Roumen, 73000 Montagnole (FR)
(72) Inventeur: Kaltchev, Roumen, 73000 Montagnole (FR)
(74) Mandataire: Vuillermoz, Bruno

(56) Documents cités:
- EP-A- 0 604 271
- EP-A- 0 679 422
- WO-A-97/20775
- DE-A- 4 329 239
- FR-A- 1 014 112
- FR-A- 1 306 193
- FR-A- 2 056 774
- FR-E- 56 208
- US-A- 3 862 033
- US-A- 4 089 782

## Description

### DOMAINE TECHNIQUE

L'invention concerne un dispositif de clarification par flottation lamellaire. Le dispositif selon l'invention peut être utilisé pour accélérer la séparation des matières en suspension, ci-après désignées par le sigle MES, contenues dans un liquide, et ce par flottation naturelle, si leur densité est inférieure à celle du liquide. Il peut être également utilisé en association avec la technique de la flottation à air dissous. Dans ces deux applications la construction et le principe de fonctionnement du dispositif selon l'invention demeurent les mêmes.

L'appellation courante de ce type de clarificateurs, utilisant la flottation et la technique lamellaire est flottateur à plaques inclinées ou flottateur lamellaire.

Le procédé et le dispositif décrits sont particulièrement destinés à accélérer la séparation des matières en suspension d'un effluent liquide.

### ART ANTERIEUR

Les dispositifs existants de ce type utilisent les techniques suivantes :
A/ La technique de la séparation lamellaire.
   Cette technique est utilisée pour accélérer la séparation des MES d'un liquide lorsque la densité des MES est différente de celle du liquide. Si la densité des MES est inférieure à celle du liquide, on parle de clarification lamellaire par flottation. La théorie fondamentale de la séparation lamellaire et les avantages de cette technique ne seront pas décrites dans la présente, car considérés comme connus.
B/ La technique de la flottation à air dissous.
   Cette technique est souvent associée à la technique de la séparation lamellaire. Elle consiste à utiliser la propriété de microbulles d'air (ou bien d'un autre gaz), produites par un dispositif approprié, propriété qui réside dans la capacité de ces microbulles d'adhérer aux particules, c'est à dire aux matières en suspension, présentes dans le liquide, et de les entraîner à la surface du liquide. Dans ce cas on parle d'une flottation forcée.

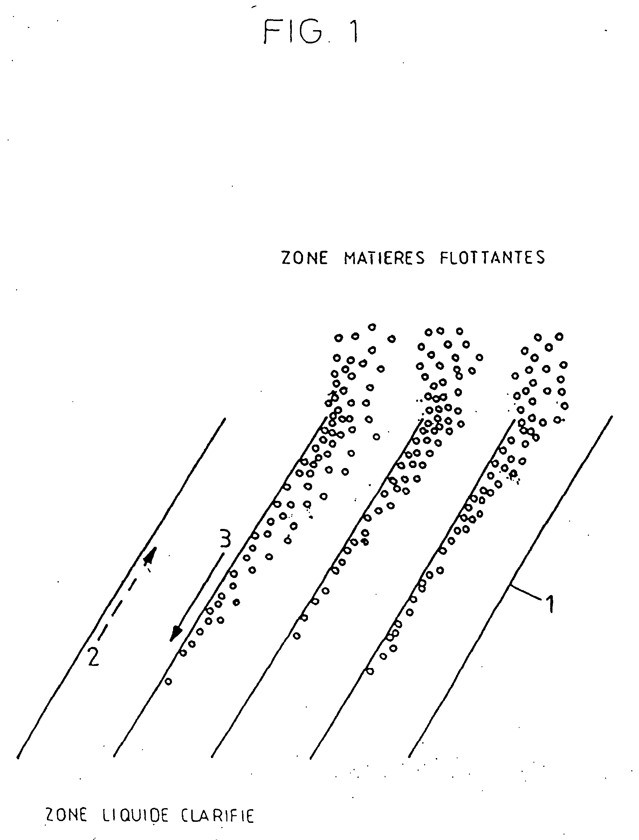

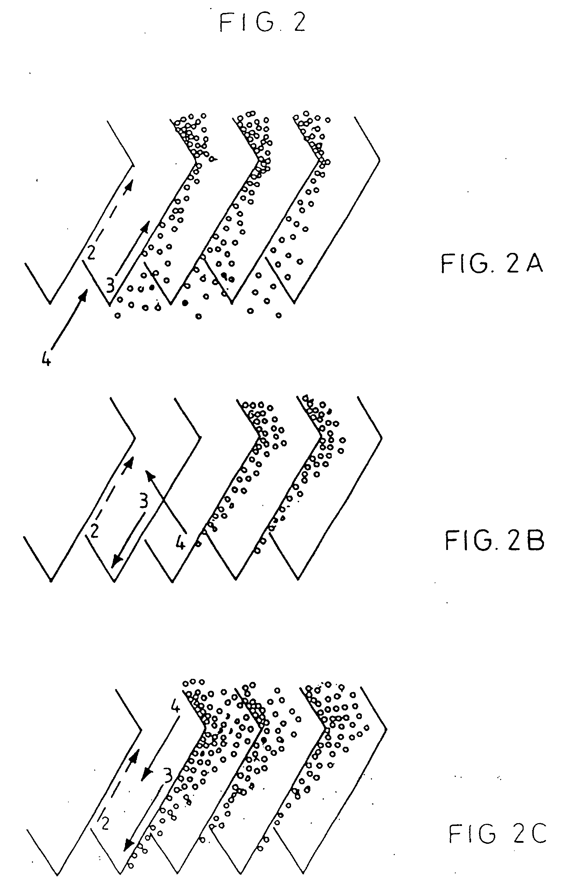

Le principe de la séparation lamellaire par flottation des MES du liquide va être sommairement décrit ci-après, à l'appui des figures 1 et 2A - 2C :

Il convient préalablement de préciser, que dans le cas de l'utilisation de la technique de la flottation à air dissous, le dispositif de production de microbulles d'air nécessaire à la flottation n'est pas décrit dans la présente, car considéré comme connu. Il est simplement supposé que les MES à séparer du liquide ont une densité inférieure à celle du liquide ou bien qu'elles sont «allégées» par des microbulles et donc qu'elles flottent.

Le liquide chargé en matières flottantes est introduit entre les plaques inclinées (1) appelées aussi lamelles (figure 1). Les matières flottantes représentées sur les différentes figures par des petits cercles, remontent vers le haut jusqu'à ce qu'elles atteignent la surface de la plaque supérieure desdites lamelles. Ensuite elles remontent en glissant le long de la plaque constitutive de chacune des lamelles dans le sens de la flèche représentée en traits mixtes (2) jusqu'à l'extrémité supérieure de chacune desdites lamelles. Arrivées à ce stade, les matières flottantes se détachent de la plaque et remontent vers la surface du liquide. La place occupée par les particules, et donc libérée est prise par le liquide clarifié, qui «glisse» le long de la surface de la plaque inférieure dans le sens de la flèche (3), c'est à dire dans un sens opposé à celui de la remontée des matières flottantes, c'est à dire du haut vers le bas. Ainsi le liquide clarifié et les matières flottantes se croisent entre deux plaques pour se séparer : les matières flottantes vers le haut et le liquide clarifié vers le bas.

En fonction du sens du flux d'introduction du liquide à clarifier par rapport aux lamelles, il existe trois types de clarificateurs lamellaires :
1/ Clarificateurs à co-courant (figure 2A)
   L'introduction du liquide à clarifier (4) s'effectue du bas vers le haut. Entre les plaques (1), les matières flottantes et le liquide se déplacent dans le même sens.
   Théoriquement cette solution est très avantageuse, car la remontée des matières flottantes n'est pas perturbée par le déplacement du liquide clarifié, puisque les deux entités se déplacent dans le même sens. En réalité cette solution n'a pratiquement pas trouvé d'application dans la pratique, compte tenu du problème lié à l'évacuation du liquide clarifié. En effet les matières flottantes et le liquide clarifié sont récupérés du même côté des lamelles et ils se remélangent facilement dans la zone située au dessus des lamelles.
2/ Clarificateur à courants croisés (figure 2B)
   L'introduction du liquide à clarifier s'effectue latéralement par le côté du dispositif dans le sens de la flèche (4), de telle sorte que le liquide à clarifier et les matières flottantes circulent perpendiculairement par rapport à la direction d'introduction. Cette technique est également peu utilisée dans la pratique à cause des problèmes liés à l'équirépartition des flux.
3/ Clarificateur à contre courant (figure 2C)
   L'introduction du liquide à clarifier s'effectue dans le sens de la flèche (4) du haut vers le bas. Cette technique est de loin la plus utilisée dans la pratique, car dans ce cas la séparation des matières flottantes et du fluide clarifié est très nette : les premières sont récupérées au dessus des lamelles, et le fluide clarifié est récupéré en dessous des lamelles. Néanmoins la mise en oeuvre de cette solution se heurte à plusieurs problèmes :
   - Afin d'augmenter la Surface Totale Projetée (STP) et donc la capacité de séparation du flottateur pour la même surface au sol, il s'avère nécessaire de ;
      ■ diminuer la distance entre les lamelles ; cependant plus cette distance est faible, plus le frottement entre le voile de matières flottantes qui remontent et le flux du liquide clarifié qui descend est important, ce qui perturbe la remontée des matières flottantes ;
      ■ d'augmenter la hauteur des lamelles pour pouvoir augmenter la vitesse de passage entre les lamelles ; en réalité la hauteur des lamelle dépend de la quantité de MES à évacuer et de la compactibilité du voile de matières flottantes. Les lamelles trop hautes sont facilement engorgées en partie haute par un voile de matières flottantes trop important ;
   - Dans l'espace situé au dessus des lamelles, les matières flottantes concentrées entre les lamelles entrent en contact avec le liquide à clarifier. Par conséquent elles sont rediluées par le liquide et une partie d'entre elles est de nouveau entraînée par le liquide entre les lamelles, ce qui diminue l'efficacité de la séparation.

Dans la pratique ces problèmes se traduisent par une diminution de la vitesse ascensionnelle limite Va = débit / STP applicable sur un flottateur lamellaire par rapport à un flottateur à flux vertical. Cette diminution de la vitesse ascensionnelle limite dépend des facteurs suivants :
■ la vitesse de flottation des particules : plus la vitesse augmente et plus la vitesse ascensionnelle limite du flottateur lamellaire se rapproche de celle du flottateur à flux vertical ;
■ la concentration en MES : plus elle augmente et plus la vitesse ascensionnelle limite du flottateur lamellaire diminue par rapport à celle du flottateur à flux vertical ;
■ la compactibilité du voile de matières flottantes : plus les matières flottantes se compactent facilement, et plus la vitesse ascensionnelle limite du flottateur lamellaire se rapproche de celle du flottateur à flux vertical.

La conséquence de ces différents facteurs résultent dans une utilisation de la clarification lamellaire bien en deçà de ses capacités théoriques.

A titre indicatif dans le cas de la clarification par flottation à air dissous d'effluents aqueux, la vitesse maximale théorique de flottation se situe aux environs de 18 m/h. Dans la pratique les flottateurs à flux vertical sont limités à environ 8 m/h pour les constructions les plus évoluées, alors que certains constructeurs de flottateurs lamellaires se limitent à une vitesse ascensionnelle limite Va de 2 m/h seulement, à cause essentiellement des contraintes hydrauliques mentionnées ci-dessus.

Il ressort de ces différents constats, que la clarification à co-courant permet de séparer rapidement des quantités importantes de MES, mais en revanche, de n'aboutir qu'à une clarification grossière. A contrario, la clarification à contre-courant donne de bons résultats pour des quantités de MES relativement réduites, et permet d'aboutir à une clarification de bonne qualité. Néanmoins, ce mode de clarification est fortement influencé par la concentration en MES dans l'effluent à traiter.

### BREVE DESCRIPTION DE L'INVENTION

L'objet de l'invention est de mettre en oeuvre un clarificateur du type en question, susceptible d'utiliser les deux techniques dans les meilleures conditions pour chacune d'entre elles, respectivement à co-courant et à contre-courant, tout en s'affranchissant des inconvénients rappelés ci-dessus, et partant, en optimisant leurs capacités de séparation des matières solides en suspension dans un liquide.

Ce clarificateur comporte une pluralité d'éléments en forme de « U » immergés dans la cuve du clarificateur, lesdits éléments étant disposés sensiblement parallèlement les uns aux autres et séparés selon une certaine distance les uns par rapport aux autres, et inclinés par rapport à l'horizontal, la partie ouverte du « U » étant dirigée vers le haut, chacun desdits éléments recevant en outre au voisinage de son fond un moyen d'extraction du liquide clarifié s'étendant sensiblement sur toute sa largeur; le clarificateur comprend aussi des moyens d'introduction du liquide à clarifier dans la cuve à l'extérieur desdits éléments en forme de U et du coté du fond desdits éléments.

La manière dont l'invention peut être réalisée et les avantages qui en découlent, ressortiront mieux des exemples de réalisation qui suivent, donnés à titre indicatif et non limitatif, à l'appui des figures annexées.

### BREVE DESCIPTION DES FIGURES

La figure 1 représente schématiquement le principe général de la séparation lamellaire par flottation.

Les figures 2A, 2B et 2C représentent schématiquement les trois types de clarification lamellaire par flottation en fonction du sens d'introduction du liquide à clarifier.

La figure 3A représente schématiquement le principe du dispositif selon l'invention dans le cas d'une clarification par flottation avec entrée du liquide à clarifier entre les éléments en forme de « U » et sortie du liquide clarifier à l'intérieur au fond des éléments.

La figure 3C représente schématiquement un principe analogue à celui décrit dans la figure 3A, mais avec une colonne d'éléments en forme de « U » verticale.

La figure 4. montre quelques éléments optionnels pouvant être associés au dispositif selon l'invention.

La figure SA montre un élément selon l'invention sans cloisons latérales. Dans ce cas ce sont les parois de la cuve du clarificateur qui referment l'élément en « U » des deux côtés.

La figure 5B montre un élément selon l'invention avec cloisons latérales intégrées à l'élément en forme de « U ».

La figure 6A représente une vue schématique en coupe longitudinale d'un appareil de clarification par flottation équipé du dispositif selon l'invention, avec une rangée horizontale d'éléments en forme de « U ».

La figure 6B représente une vue schématique en coupe transversale de l'appareil montré sur la figure 6A.

La figure 7A représente une vue schématique en coupe longitudinale d'un autre forme de réalisation de l'appareil de clarification par flottation équipé du dispositif selon l'invention, avec une configuration verticale des éléments en forme de « U ».

La figure 7B représente une vue schématique en coupe transversale de l'appareil montré sur la figure 7A.

La figure 7C représente une vue schématique en coupe longitudinale d'une variante de l'appareil montré sur la figure 7A.

### DESCRIPTION DETAILLEE DU DISPOSITIF SELON L'INVENTION

Le dispositif selon l'invention permet de mettre en oeuvre simultanément deux techniques de séparation lamellaire par flottation, fonctionnat respectivement à co-courant et ensuite à contre-courant.

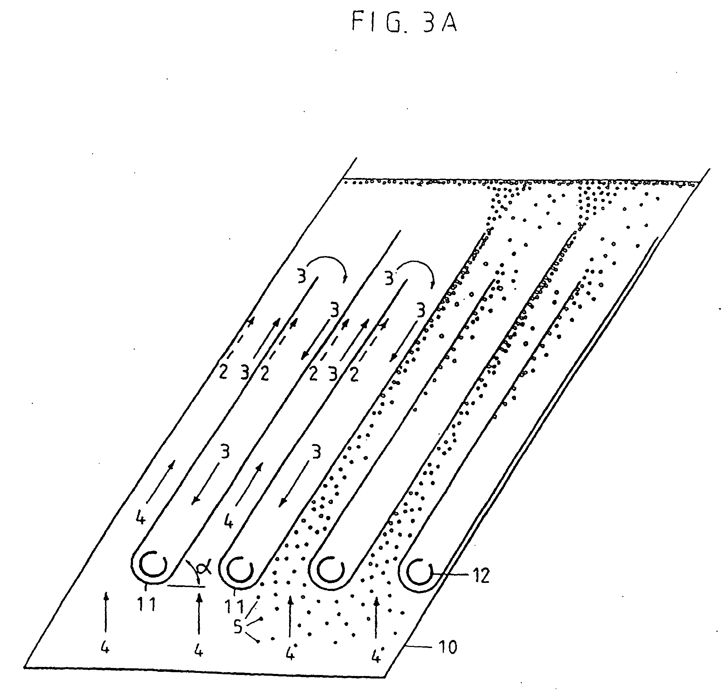

Selon une première caractéristique de l'invention, le clarificateur comporte plusieurs (au moins deux) éléments en forme de « U » (11), inclinés selon un angle α par rapport à l'horizontale, et immergés dans la cuve (10), tel qu'on peut bien l'observer sur les figures 3A - 3C, et donc positionnés sous la surface du liquide. Chaque élément (11) est équipé d'un collecteur (12) placé au fond de l'élément du côté de son extrémité fermée. Ces collecteurs sont typiquement constitués d'un élément tubulaire, ouvert le long de l'une de ses génératrices Les éléments (11) sont disposés en rangée à une certaine distance les uns des autres.

La distance séparant les deux branches de chacun des éléments (11) est choisie de telle sorte qu'elle soit suffisante pour permettre une séparation entre les matières flottantes (5) et le liquide clarifié. Il est en outre précisé que, même si la distance séparant deux éléments (11) successifs n'est pas nécessairement égale à la distance séparant les deux branches d'un même élément, elle est néanmoins choisie de telle sorte qu'elle remplisse la même condition, c'est à dire être suffisante pour permettre une séparation entre les matière flottantes (5) et le liquide clarifié. A titre indicatif, dans la pratique la distance entre les branches ou plaques des éléments en forme de « U » (11) est comprise entre 5 et 15 cm.

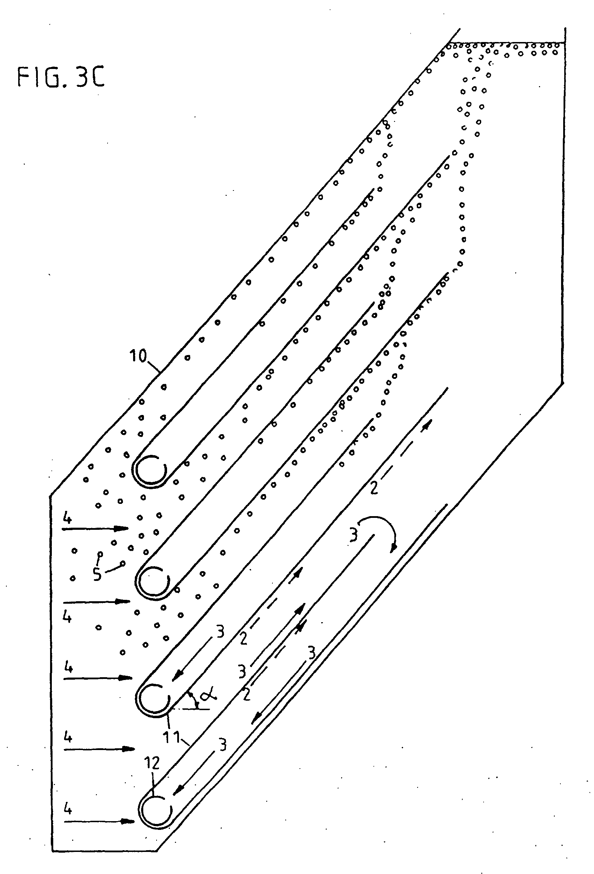

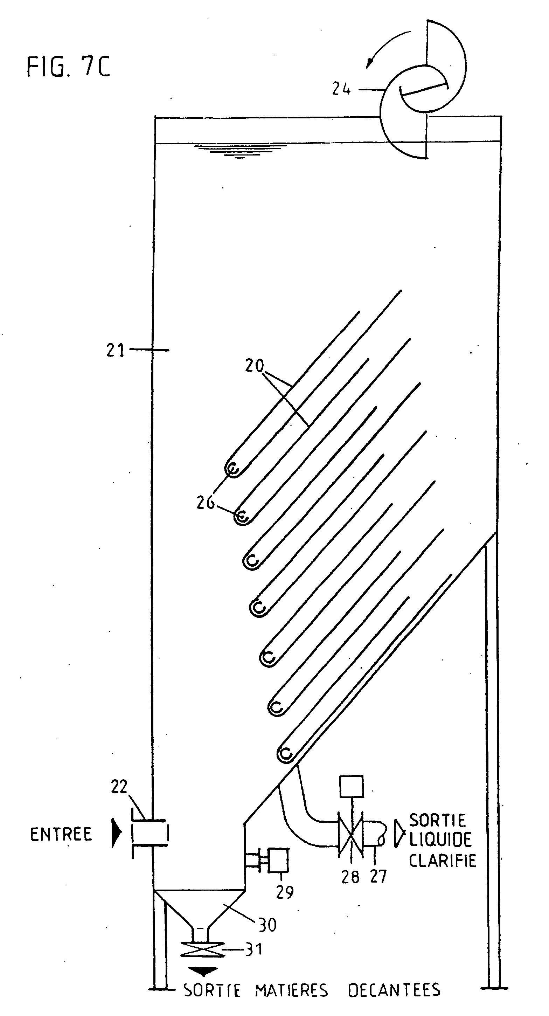

Ainsi qu'on peut bien l'observer sur les figures, ces éléments peuvent se présenter selon une configuration en rangée horizontale (figure 3A) en colonne verticale (figure 3C) ou encore en colonne verticale avec décalage horizontale d'un élément au suivant (figure 7C).

L'extrémité fermée de chacun des éléments (11) est disposée en bas, et l'extrémité ouverte en haut.

Le liquide à clarifier est introduit dans l'espace situé à l'extérieur des éléments (11) du côté de leur extrémité fermée. Il pénètre entre les éléments (11) dans le sens de la flèche (4) jusqu'à atteindre la partie inférieur des éléments (11). Entre lesdits éléments (11), les matières flottantes (5) remontent jusqu'à toucher la paroi extérieure inférieure des éléments (11) et ensuite glissent vers le haut le long de ladite paroi. Arrivées à l'extrémité supérieure des éléments (11), les matières flottantes sont évacuées vers la surface du liquide située au dessus des éléments (11). Le liquide (entièrement ou partiellement clarifié) remonte également du bas vers le haut dans le sens de la flèche (3). Dans cette partie du parcours du liquide la clarification s'effectue selon le principe « à co-courant ».

Ensuite le liquide (entièrement ou partiellement clarifié) descend à l'intérieur de chaque élément (11) du haut vers le bas dans le sens de la flèche (3), où une deuxième séparation s'effectue selon le principe « à contre courant ». Les matières flottantes (5) remontent le long de la paroi supérieure desdits éléments, mais à l'intérieur de chacun d'eux, selon le sens de la flèche (2). Le liquide clarifié est collecté au fond de chaque élément (11) par le collecteur (12) dont il est muni, et est évacué de la cuve du clarificateur (10).

Le fonctionnement du dispositif de clarification selon l'invention est étroitement lié à la construction et à la mise en oeuvre des éléments en forme de « U » (11). Le côté fermé des éléments est systématiquement positionné du côté de l'arrivée du liquide à clarifier. Le fond des éléments est positionné en bas et le côté ouvert en haut, ainsi que déjà dit. L'espace situé à l'intérieur des éléments (11) est délimité verticalement par les deux parois inclinées qui constituent les branches du «U», et latéralement soit par les deux parois opposée de la cuve du clarificateur (10), soit par des parois incorporés à l'élément. De cette façon chaque élément renferme un espace vers lequel le seul accès est par le coté ouvert situé au dessus desdits éléments. Cette disposition des éléments du dispositif selon l'invention permet de faire circuler le liquide entre les éléments du bas vers le haut et ensuite à l'intérieur de chaque élément (11) du haut vers le bas comme présentée sur les figures 3A et 3C.

La mise en oeuvre des éléments inclinés en forme de « U » peut être réalisée de plusieurs façons : ils peuvent être fixés sur la cuve du clarificateur (10) (figures 3A, 3C). Chaque élément (11) peut être fixé indépendamment dans la cuve du clarificateur (10). Le cas échéant, deux ou plusieurs éléments (11) peuvent former un bloc. Les éléments 11 peuvent également être supportés par un support extérieur à la cuve du clarificateur.

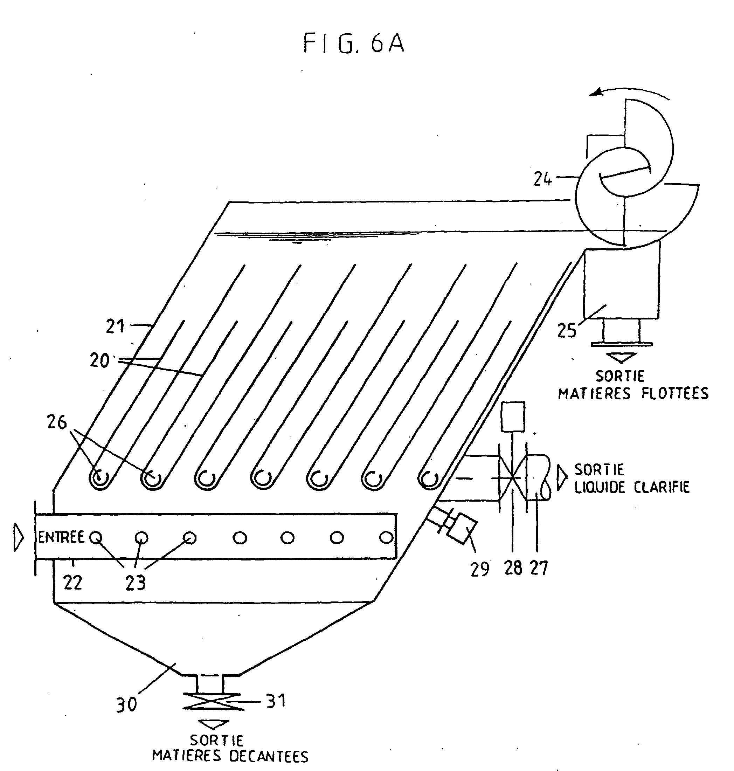

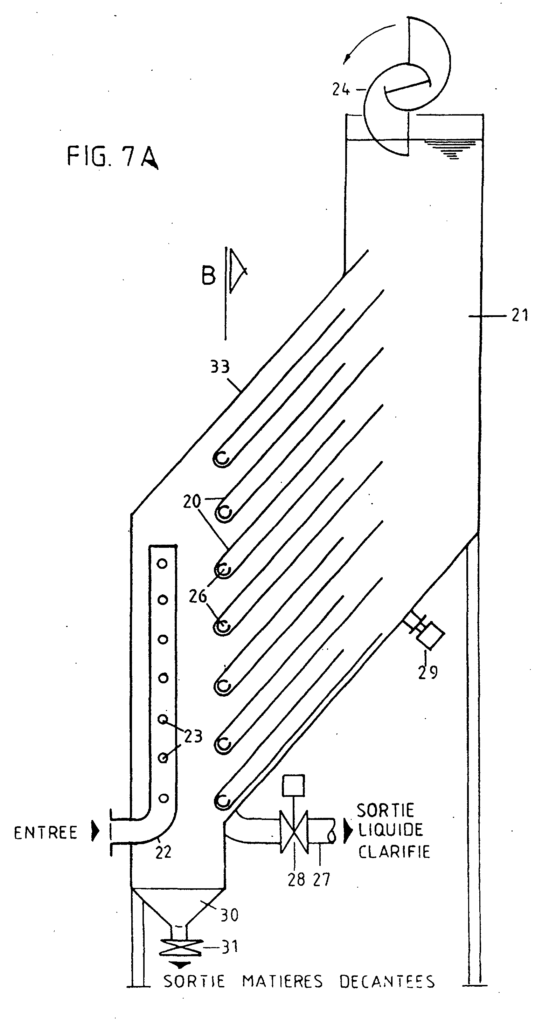

En outre, les éléments en forme de « U » (11) peuvent adopter une configuration horizontale, dans laquelle ils sont orientés parallèlement les uns aux autres à la même hauteur au sein de la cuve (10) (figures 3A, 6A). Ils peuvent également adopter une configuration verticale, dans laquelle ils sont orientés parallèlement les uns aux autres et les uns au dessus des autres (figures 3C, 7A). Enfin, ils peuvent adopter une configuration dite inclinée, dans laquelle ils sont orientés parallèlement les uns aux autres et les uns au dessus des autres, tout en présentant un certain décalage selon une droite inclinée (figure 7C).Quelle que soit la configuration retenue, le côté fermé de chaque élément reste toujours en dessous par rapport à son côté ouvert.

Les éléments (11) peuvent être réalisés en métal, plastique, toile, céramique, ou tout autre matériau plat ou profilé, rigide ou souple. Le cas échéants les éléments (11) peuvent être constitués de plusieurs parties différentes formant un ensemble.

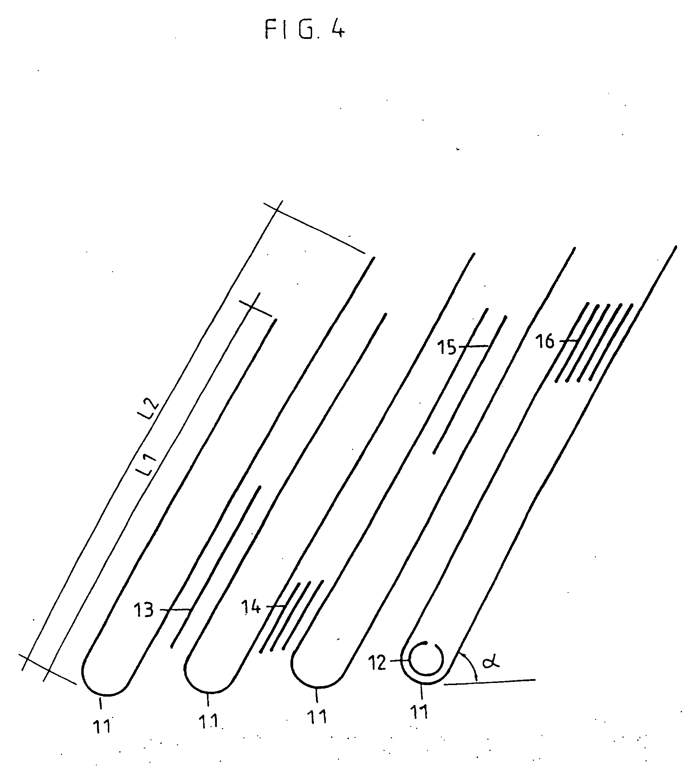

Les parois de chaque élément (11) peuvent être droites ou courbes, parallèles ou non parallèles. Les parois de chaque élément peuvent avoir la même longueur ou des longueurs différentes (sur figure 4. ; L₁ = L₂ ou bien L₁ < L₂ ou encore L₁ > L₂)

Une ou plusieurs plaques parallèles (13, 14) peuvent être installées entre les éléments (figure 4.). De même, une ou plusieurs plaques parallèles (15, 16) peuvent être installées à l'intérieur des éléments (figure 4). Ces plaques sont positionnées également parallèlement aux branches constitutives des éléments (11), et sont destinées à atténuer les éventuelles turbulences transversales susceptibles de se produire à l'entrée ou entre les éléments (11), et à mieux orienter les flux.

Les éléments (11) sont inclinés selon un certain angle α par rapport à l'horizontale. Le cas échéant, ils peuvent être orientés verticalement. Le liquide clarifié peut être collecté au fond de chaque élément (11) par un collecteur (12) incorporé à l'intérieur de l'élément ou bien par simples piquages au fond de l'élément.

Chaque élément (11) peut être ouvert latéralement des deux côtés (figure 5A.). Dans ce cas la paroi de la cuve (10) de clarification servira elle même pour séparer l'espace extérieur de l'espace intérieur de l'élément.

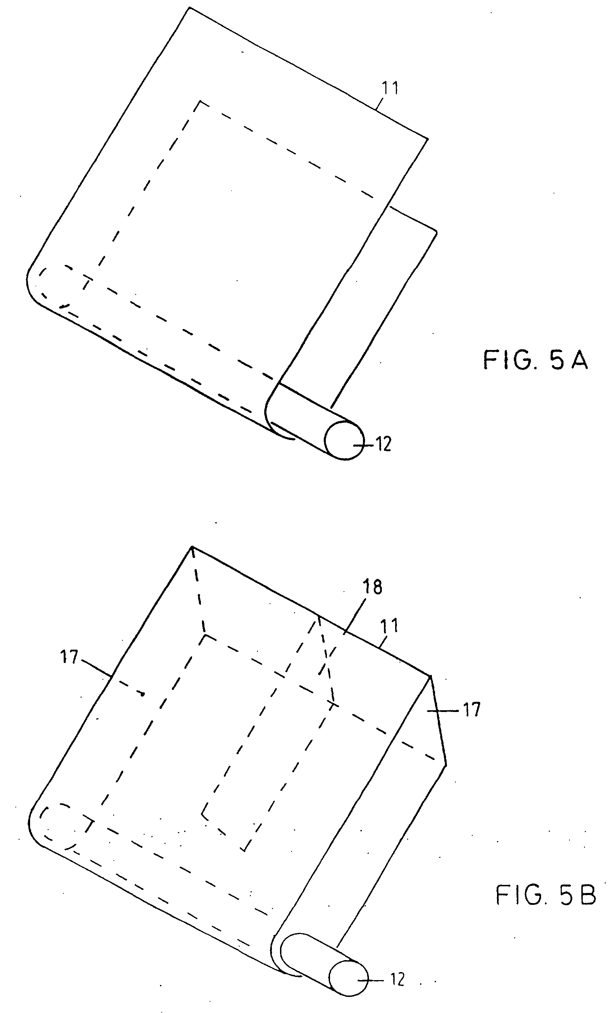

Chaque élément (11) peut être fermé latéralement des deux côtés avec une paroi (17) et comporter ou non des renforts (18) (fig. 5B). Dans ce cas il est entendu que la distance entre les parois (17) et la cuve (10) du clarificateur est suffisamment faible, afin d'éviter le passage du liquide entre les parois (17) et la paroi du clarificateur, de telle sorte que tout le liquide à clarifier passe entre les éléments (11).

On a représenté au sein de la figure 7C, une variante du clarificateur conforme à l'invention et représenté sur la figure 7A. Par rapport à ce dernier, on observe tout d'abord, que la colonne d'éléments en forme de « U » (20) n'est pas verticale, mais inclinée. Ensuite, le collecteur de répartition (22) est remplacé par un simple piquage situé dans le fond de la cuve (21) du clarificateur. Enfin, la colonne d'éléments (20) n'est pas limitée dans sa partie supérieur par une paroi (33), qui est ici escamotée, de sorte que tout le liquide à clarifier n'est pas forcé de passer entre les éléments (20) : en effet, une partie des matières flottante peut s'échapper directement vers la surface du liquide sans passer entre les éléments.

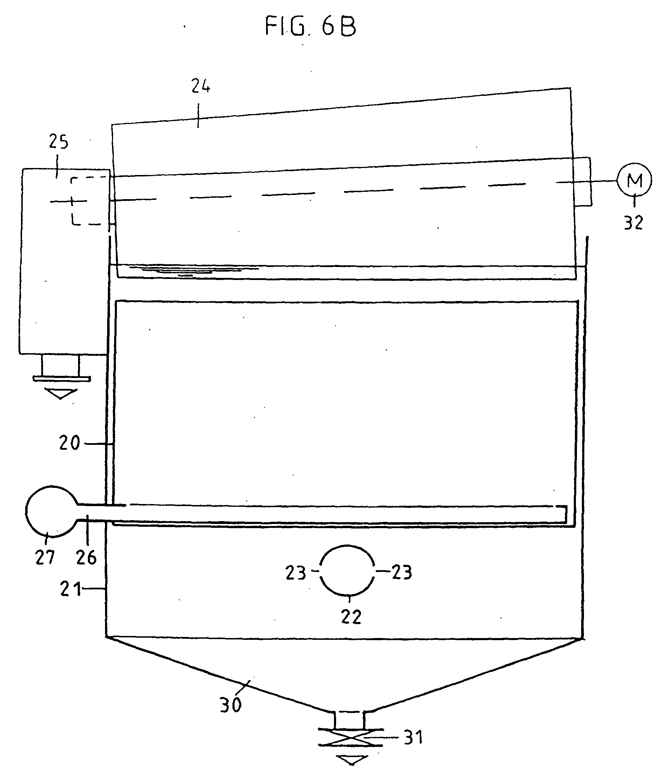

Le nombre d'éléments (11, 20) dépend de la taille du clarificateur et est sans importance dans cet exemple. Le liquide à clarifier est introduit par le collecteur d'entrée (22). Le liquide à clarifier pénètre dans la cuve (21) du clarificateur du côté de l'extrémité fermée desdits éléments (20) au travers d'orifices (23) ménagés sur le collecteur d'entrée (20) (figures 6A, 6B, 7A) ou bien directement dans la cuve (21) du clarificateur (figure 7C). Les matières flottantes remontent à la surface du liquide selon le principe décrit ci dessus et illustré en liaison avec les figures 3A et 3C. Une fois accumulées à la surface du liquide, les matière flottantes sont évacuées, par exemple au moyen d'une écope spirale (24) vers un réceptacle de sortie (25). La rotation de l'écope est assurée par un entraînement extérieur (32). L'évacuation des matières flottantes peut également s'effectuer au moyen d'un racleur de surface, par simple débordement dans un caniveau ou par un autre moyen.

Le liquide clarifié descend à l'intérieur des éléments (20) pour être collecté par les collecteurs perforés (26) et évacué vers le collecteur de sortie (27). La régulation du niveau du liquide dans la cuve (21) du clarificateur est assurée par une vanne de régulation (28) contrôlée par un détecteur de pression (29).

Si le liquide contient des matières décantables en plus des matières flottables, elles sont récupérées au fond de la pyramide renversée (30) formant le fond de la cuve du clarificateur. A ce niveau, elles sont purgées périodiquement par une vanne automatique ou manuelle (31). La collecte des matière décantables peut également s'effectuer au moyen d'un racleur de fond ou par tout autre moyen.

A titre indicatif, les dimensions principales du clarificateur décrit en liaison avec les figures 6A et 6B peuvent être dans l'ordre de grandeur suivant :

| | |
|---|---|
| longueur totale | 3 m |
| largeur totale | 2,5 m |
| hauteur totale | 3 m. |

Les éléments en forme de « U » sont inclinés à 55° par rapport à l'horizontale.

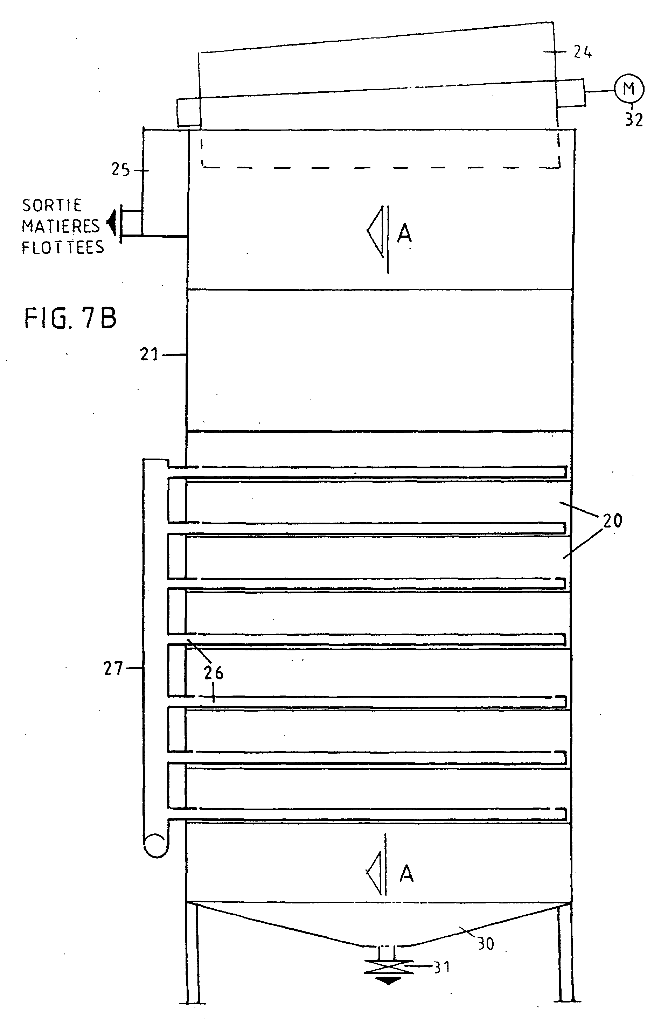

A titre indicatif les dimensions principales du clarificateur décrit en liaison avec les figures 7A, 7B et 7C peuvent être dans l'ordre de grandeur suivant :

| | |
|---|---|
| longueur totale | 2 m |
| largeur totale | 2,2 m |
| hauteur totale | 4 m. |

Les éléments en forme de « U » sont inclinés à 50° par rapport à l'horizontale.

La flottation pourrait être naturelle ou forcée. Dans le deuxième cas la flottation sera provoquée par des microbulles de gaz (air ou autre) produites par un dispositif extérieur non décrit et introduites dans le collecteur d'entrée (22) en amont de l'appareil.

On conçoit dès lors tout l'intérêt du dispositif conforme à l'invention, dans le cadre du traitement des effluents liquides et des eaux résiduaires. En effet, outre une optimisation du fonctionnement de la clarification, il est possible de diminuer de manière significative l'encombrement de tels dispositifs.

## Revendications

1. Dispositif de clarification par flottation de liquide chargé en matières solides, comprenant une cuve (10) destinée à recevoir le liquide à clarifier, ***caractérisé* :**
• en ce qu'il comporte une pluralité d'éléments en forme de « U » (11, 20) immergés dans la cuve (10), lesdits éléments étant disposés sensiblement parallèlement les uns aux autres et séparés selon une certaine distance les uns par rapport aux autres, et inclinés par rapport à l'horizontale, la partie ouverte du « U » étant dirigée vers le haut, chacun desdits éléments en forme de « U » (11, 20) recevant en outre au voisinage de son fond un moyen d'extraction du liquide clarifié (12, 26) s'étendant sensiblement sur toute sa largeur ;
• et en ce qu'il comprend des moyens (22, 23) d'introduction du liquide à clarifier dans la cuve (10) à l'extérieur desdits éléments en forme de «U» (11, 20) et du coté du fond desdits éléments.

2. Dispositif de clarification par flottation selon la revendication 1, ***caractérisé* en ce que** les éléments en forme de « U » (11, 20) sont configurés selon une rangée, dans laquelle ils sont orientés parallèlement les uns aux autres à la même hauteur au sein de la cuve (10).

3. Dispositif de clarification par flottation selon la revendication 1, ***caractérisé* en ce que** les éléments en forme de « U » (11, 20) sont configurés selon une colonne verticale, dans laquelle ils sont orientés parallèlement les uns aux autres et les uns au dessus des autres au sein de la cuve (10).

4. Dispositif de clarification par flottation selon la revendication 1, ***caractérisé* en ce que** les éléments en forme de « U » (11, 20) sont configurés selon une colonne inclinée, dans laquelle ils sont orientés parallèlement les uns aux autres et les uns au dessus des autres, tout en présentant un certain décalage selon une droite inclinée.

5. Dispositif de clarification par flottation selon l'une des revendications 1 à 4, ***caractérisé* en ce que** la distance séparant deux éléments en forme de « U » consécutifs (11, 20) est égale à la distance séparant les deux branches constitutives dudit « U ».

6. Dispositif de clarification par flottation selon l'une des revendications 1 à 5, ***caractérisé* en ce que** les éléments en forme de « U » (11, 20) sont fermés latéralement des deux cotés par les parois de la cuve (10).

7. Dispositif de clarification par flottation selon l'une des revendications 1 à 5, ***caractérisé* en ce que** les éléments en forme de « U » (11, 20) sont fermés latéralement des deux cotés par des parois (17) intégrées auxdits éléments, formant ainsi une boîte ouverte d'un seul côté, l'ouverture étant disposée en haut par rapport à l'horizontale.

8. Dispositif de clarification par flottation selon l'une des revendications 1 à 7, ***caractérisé* en ce que** les éléments en forme de « U » (11, 20) sont réalisés en un matériau rigide ou souple choisi dans le groupe comprenant le métal, les matières plastiques, les céramiques, les toiles ou en un mélange de ces matériaux.

9. Dispositif de clarification par flottation selon l'une des revendications 1 à 8, ***caractérisé* en ce qu**'il comprend en outre une ou plusieurs plaques supplémentaires (13 - 16), mises en place entre les éléments en forme de « U » (11, 20) ou bien à l'intérieur desdits éléments.

## Claims

1. Device for clarifying, by flotation, liquid charged with solid material, comprising a tank (10) designed to receive the liquid to be clarified, ***characterized* in that** :
• it includes a plurality of U-shaped elements (11, 20) immersed in the tank (10), said elements being arranged more or less parallel to each other and separated by a certain distance from each other, and inclined relative to the horizontal, the open part of the "U" facing upwards, each of said U-shaped elements also receiving, in the region of its base, an extraction means (12, 26) of the clarified liquid extending more or less along its whole length ;
• it includes introduction means (22, 23) of the liquid to be clarified into the tank (10) on the side of the closed end of the U-shaped elements (11, 20) and outside said elements.

2. Device for clarifying by flotation according to Claim 1, ***characterized* in that** the U-shaped elements (11, 20) are configured in an array, in which they are oriented parallel to each other at the same height in the tank (10).

3. Device for clarifying by flotation according to Claim 1, ***characterized* in that** the U-shaped elements (11, 20) are configured in a vertical column, in which they are oriented parallel to each other and above one another in the tank (10).

4. Device for clarifying by flotation according to Claim 1, ***characterized* in that** the U-shaped elements (11, 20) are configured in an inclined column, in which they are oriented parallel to each other and above one another, while being offset by a certain amount along an inclined line.

5. Device for clarifying by flotation according to one of Claims 1 to 4, ***characterized* in that** the distance separating two consecutive U-shaped elements (11, 20) is equal to the distance separating the two arms constituting said "U".

6. Device for clarifying by flotation according to one of Claims 1 to 5, ***characterized* in that** the U-shaped elements (11, 20) are closed laterally on the two sides by the walls of the tank (10).

7. Device for clarifying by flotation according to one of Claims 1 to 5, ***characterized* in that** the U-shaped elements (11, 20) are closed laterally on the two sides by walls (17) incorporated into said elements, thus forming a box which is open on one side only, the opening being arranged above the horizontal.

8. Device for clarifying by flotation according to one of Claims 1 to 7, ***characterized* in that** the U-shaped elements (11, 20) are made of a rigid or flexible material chosen from the group comprising metal, plastics, ceramics, cloth or a mixture of these materials.

9. Device for clarifying by flotation according to one of Claims 1 to 8, ***characterized* in that** it also comprises one or more additional plates (13 - 16), placed between the U-shaped elements (11, 20) or else inside said elements.

## Patentansprüche

1. Vorrichtung zur Klärung durch Flotation von mit Feststoffen belasteter Flüssigkeit, mit einer Wanne (10) zur Aufnahme der zu klärenden Flüssigkeit,
**dadurch gekennzeichnet:**
- daß sie eine Vielzahl von in die Wanne (10) eingetauchten U-förmigen Elementen (11, 20) enthält, wobei die genannten Elemente im wesentlichen parallel zueinander angeordnet sind und durch einen gewissen Abstand voneinander getrennt und gegenüber der Horizontalen geneigt sind, wobei der offene Teil des "U" nach oben gerichtet ist, wobei ein jedes der genannten U-förmigen Elemente (11, 20) weiterhin in der Nähe seines Bodens ein Mittel zum Ableiten der geklärten Flüssigkeit (12, 26) aufnimmt, das sich im wesentlichen über dessen gesamte Breite erstreckt;
- und daß sie Mittel (22, 23) zum Einleiten der zu klärenden Flüssigkeit in die Wanne (10) außerhalb der genannten U-förmigen Elemente (11, 20) und auf der Seite des Bodens der genannten Elemente enthält.

2. Vorrichtung zur Klärung durch Flotation nach Anspruch 1, **dadurch gekennzeichnet,** daß die U-förmigen Elemente (11, 20) in einer Reihe angeordnet sind, in der sie parallel zueinander auf gleicher Höhe innerhalb der Wanne (10) ausgerichtet sind.

3. Vorrichtung zur Klärung durch Flotation nach Anspruch 1, **dadurch gekennzeichnet,** daß die U-förmigen Elemente (11, 20) in einer senkrechten Spalte angeordnet sind, in der sie parallel zueinander und übereinander innerhalb der Wanne (10) ausgerichtet sind.

4. Vorrichtung zur Klärung durch Flotation nach Anspruch 1, **dadurch gekennzeichnet,** daß die U-förmigen Elemente (11, 20) in einer geneigten Spalte angeordnet sind, in der sie parallel zueinander und übereinander ausgerichtet sind und dabei eine gewisse Versetzung entlang einer geneigten Geraden aufweisen.

5. Vorrichtung zur Klärung durch Flotation nach einem der Ansprüche 1 bis 4, **dadurch gekennzeichnet,** daß der zwei aufeinanderfolgende U-förmige Elemente (11, 20) trennende Abstand so groß ist wie der Abstand, der die zwei das "U" bildenden Schenkel trennt.

6. Vorrichtung zur Klärung durch Flotation nach einem der Ansprüche 1 bis 5, **dadurch gekennzeichnet,** daß die U-förmigen Elemente (11, 20) auf beiden Seiten durch die Wände der Wanne (10) seitlich verschlossen sind.

7. Vorrichtung zur Klärung durch Flotation nach einem der Ansprüche 1 bis 5, **dadurch gekennzeichnet,** daß die U-förmigen Elemente (11, 20) auf beiden Seiten durch in die Elemente eingefügte Wände (17) seitlich verschlossen sind, wodurch ein auf nur einer Seite offener Kasten gebildet wird, wobei die Öffnung in bezug auf die Horizontale oben angeordnet ist.

8. Vorrichtung zur Klärung durch Flotation nach einem der Ansprüche 1 bis 7, **dadurch gekennzeichnet,** daß die U-förmigen Elemente (11, 20) aus einem starren oder nachgiebigen Material gefertigt sind, welches aus der Gruppe enthaltend Metall, Kunststoffe, Keramiken, Leinen, oder aus einer Mischung dieser Materialien ausgewählt ist.

9. Vorrichtung zur Klärung durch Flotation nach einem der Ansprüche 1 bis 8, **dadurch gekennzeichnet,** daß sie weiterhin eine oder mehrere zusätzliche Platten (13 - 16) enthält, die zwischen den U-förmigen Elementen (11, 20) oder aber innerhalb der Elemente angebracht sind.
